(19) Europäisches Patentamt / European Patent Office / Office européen des brevets

(11) **EP 1 446 898 B1**

(12) **FASCICULE DE BREVET EUROPEEN**

(45) Date de publication et mention
de la délivrance du brevet:
**25.07.2007 Bulletin 2007/30**

(21) Numéro de dépôt: **02791904.2**

(22) Date de dépôt: **22.11.2002**

(51) Int Cl.:
**H04B 7/08** $^{(2006.01)}$

(86) Numéro de dépôt international:
**PCT/FR2002/004018**

(87) Numéro de publication internationale:
**WO 2003/044987 (30.05.2003 Gazette 2003/22)**

(54) **RECEPTEUR DE FAISCEAUX INCIDENTS RESULTANT DE TRAJETS MULTIPLES**

MEHRWEG-STRAHLEMPFANGSVORRICHTUNG

MULTIPATH INCIDENT BEAM RECEIVER

(84) Etats contractants désignés:
**DE FR GB IT**

(30) Priorité: **23.11.2001 FR 0115195**

(43) Date de publication de la demande:
**18.08.2004 Bulletin 2004/34**

(73) Titulaire: **Thales**
**75008 Paris (FR)**

(72) Inventeur: **LEBLOND, Valéry,**
**Thales Intellectual Property**
**F-94117 Arcueil Cedex (FR)**

(74) Mandataire: **Chaverneff, Vladimir**
**Marks & Clerk France**
**31-33 Avenue Aristide Briand**
**94117 Arcueil Cédex (FR)**

(56) Documents cités:
**US-B1- 6 175 327**

• **ZOLTOWSKI M D ET AL: "Advanced adaptive null steering concepts for GPS" MILITARY COMMUNICATIONS CONFERENCE, 1995. MILCOM '95, CONFERENCE RECORD, IEEE SAN DIEGO, CA, USA 5-8 NOV. 1995, NEW YORK, NY, USA,IEEE, US, 5 novembre 1995 (1995-11-05), pages 1214-1218, XP010154134 ISBN: 0-7803-2489-7**
• **PATENT ABSTRACTS OF JAPAN vol. 008, no. 235 (E-275), 27 octobre 1984 (1984-10-27) & JP 59 114907 A (MATSUSHITA DENKI SANGYO KK), 3 juillet 1984 (1984-07-03)**

**Description**

La présente invention se rapporte à un procédé d'élimination, dans un récepteur, de faisceaux incidents résultant de trajets multiples, et à un dispositif de mise en oeuvre de ce procédé.

Les systèmes permettant aujourd'hui de renforcer la résistance aux trajets multiples dans les récepteurs de radionavigation sont la plupart du temps basés sur l'utilisation de corrélateurs plus ou moins particuliers (corrélateur étroit, corrélateur double delta, etc), permettant d'éviter de prendre en compte les trajets multiples retardés d'une distance plus ou moins importante, toujours inférieure à deux fois la longueur du chip du code pseudoaléatoire utilisé T, c'est-à-dire la période des signaux d'horloge des codes des signaux de radionavigation (par exemple, pour les signaux de type « Global Positioning System », GPS, 1 chip = 1 $\mu$s en code C/A, soit ~300m, ou 100 ns en code P, soit -30m). Néanmoins, pour des trajets multiples de retards faibles vis-à-vis de la longueur du chip, ces corrélateurs se révèlent inefficaces.

On connait d'après le brevet U.S. 6 175 327 un procédé d'élimination d'interférences dans des récepteurs de signaux de radionavigation GPS. Ce procédé utilise une technique d'inversion de puissance faisant appel à un réseau de n antennes dont les signaux sont pondérés individuellement par inversion d'une matrice d'inter-corrélation et utilisation d'une contrainte canonique ne représentant pas une direction de réception particulière, mais un critère de « minimisation de la puissance reçue en tenant compte de toutes les directions de l'espace ». Ce procédé connu d'élimination d'interférences n'est applicable qu'à des signaux dont la puissance ramenée sur chaque capteur est supérieure au niveau de puissance due au bruit thermique. En outre, ce traitement est réalisé sans connaissance préalable de la direction d'arrivée du signal que l'on souhaite éliminer. Il est donc impossible avec ce seul procédé connu de déterminer la direction d'arrivée d'un ou plusieurs signaux dus à des trajets multiples, ni de les éliminer : ces derniers sont en effet d'un niveau de puissance ramenée à l'entrée du récepteur inférieur au niveau de puissance du signal principal (trajet direct), lui-même de niveau-de puissance plus faible que celui du bruit thermique généré dans la bande spectrale de traitement (bande passante en entrée du récepteur).

La présente invention a pour objet un procédé permettant d'éliminer à la réception un signal du à des-trajets multiples et provenant d'une direction autre que celle de l'émetteur, quel que soit son retard par rapport au signal provenant directement de l'émetteur.

Le procédé de l'invention est un procédé de détermination de la direction d'arrivée puis d'élimination, dans un récepteur, d'un signal incident résultant de trajets multiples, de puissance reçue, dans la bande spectrale de traitement, plus faible que celle du bruit thermique du récepteur ; il est appliqué à une antenne constituée autour d'un capteur principal d'antenne et comportant un réseau de capteurs auxiliaires, ces capteurs auxiliaires étant tous équidistants du capteur principal et régulièrement espacés entre eux. Le procédé est caractérisé en ce que le réseau de capteurs auxiliaires comporte 2n capteurs auxiliaires, avec n $\geq$ 3, et, qu'en prenant successivement les couples de capteurs auxiliaires symétriques par rapport au capteur principal, pour déterminer la direction d'arrivée du signal résultant des trajets multiples, on effectue la combinaison pondérée des signaux issus des n capteurs, la direction de l'émetteur de signaux utiles étant connue.

La présente invention sera mieux comprise à la lecture de la description détaillée d'un mode de mise en oeuvre, pris à titre d'exemple non limitatif et illustré par le dessin annexé, sur lequel:

- La figure 1 est un schéma de principe illustrant le procédé de traitement conforme à l'invention, et
- La figure 2 est un schéma montrant un peu plus en détail qu'en figure 1 le procédé de traitement des signaux issus des capteurs auxiliaires, conformément à l'invention.

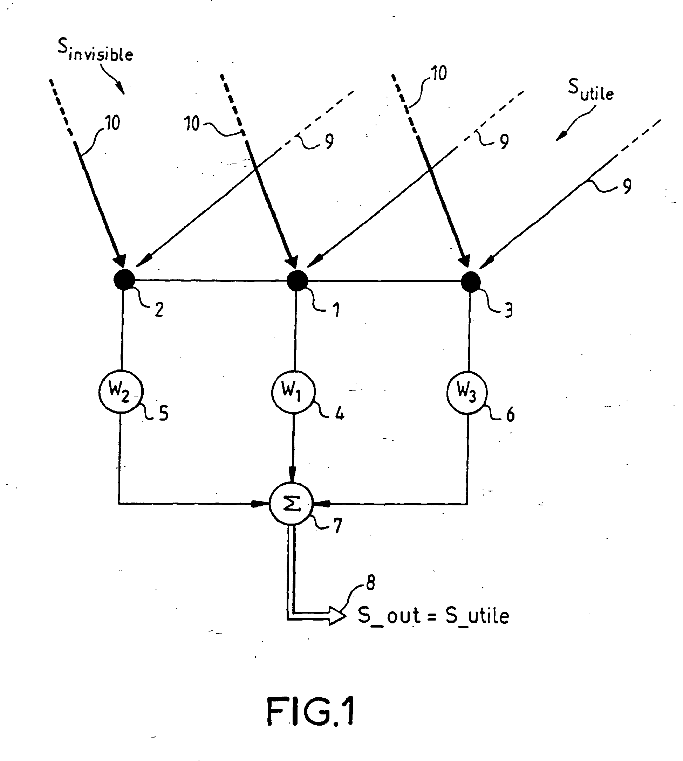

On a illustré-en figure 1, de façon très simplifiée, la mise en oeuvre des caractéristiques principales du procédé de l'invention. Ce procédé est appliqué, dans le cas présent, à des signaux de radionavigation émis par un satellite, tel qu'un satellite GPS, faisant partie d'une constellation de satellites de positionnement, mais il est bien entendu que l'invention n'est pas limitée à cette seule application, et qu'elle peut être mise en oeuvre dans d'autres applications, par exemple la réception de signaux émis par des émetteurs terrestres, à condition de connaître la direction dans laquelle sont situés ces émetteurs par rapport au lieu de réception.

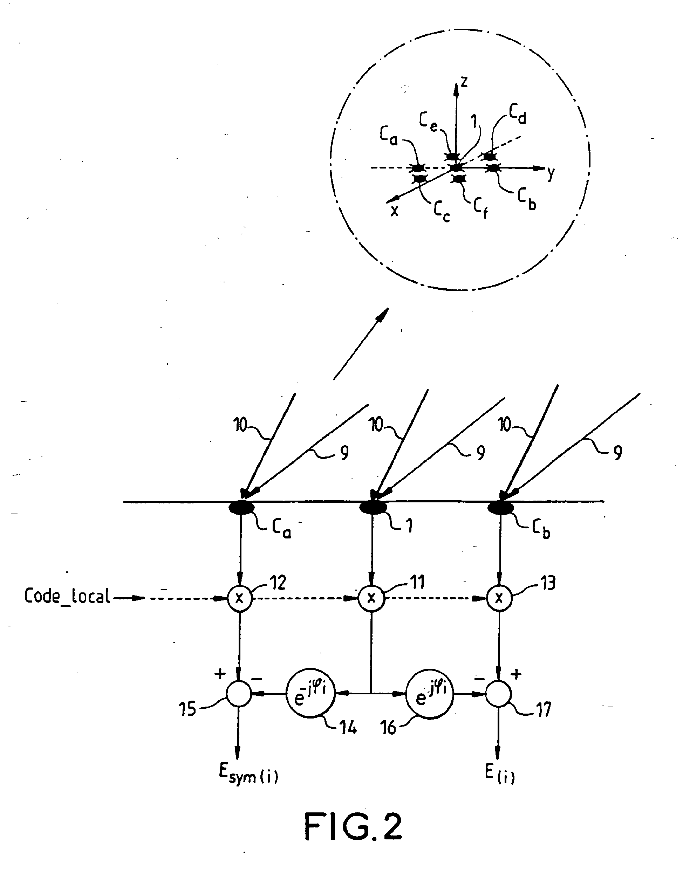

On a représenté en figure 1 un capteur principal 1 et deux capteurs auxiliaires 2, 3 qui sont alignés avec le capteur 1 et disposés symétriquement par rapport à ce dernier. Chacun des capteurs 1 à 3 est relié à un circuit de pondération complexe, respectivement 4 à 6. Les trois circuits 4 à 6 sont reliés à un circuit sommateur 7, à la sortie 8 duquel on recueille un signal $S_{out}$ qui ne comporte que le signal utile, c'est-à-dire un signal provenant directement de l'émetteur du satellite, non affecté de signaux parasites dus à des réflexions multiples du signal de l'émetteur sur des obstacles divers et parvenant aux différents capteurs avec le signal utile. On a représenté sur la figure 1, sous forme de demi-droites fléchées 9, la direction d'arrivée des trajets directs des ondes entre l'émetteur (par exemple un satellite dans le cas des signaux GPS) et les capteurs 1 à 3. De même, on a représenté sous forme de demi-droites fléchées 10 la direction d'arrivée d'un trajet non direct (c'est-à-dire après une ou plusieurs réflexions) entre l'émetteur du satellite précité et les mêmes capteurs 1 à 3. Le procédé de l'invention consiste à éliminer tout faisceau arrivant dans la direction autre que la direction des faisceaux 9, par un traitement utilisant les signaux reçus par les capteurs auxiliaires. Ce traitement consiste essentiellement à combiner de façon pondérée les signaux de ces capteurs auxiliaires avec le signal du capteur principal 1: La détermination des coefficients de pondération peut être réalisée par des algorithmes de type « inversion de puissance sous contrainte», ou bien selon la méthode « directe » décrite en détail ci-dessous, en référence à la figure 2. Dans tous les cas, on utilisera le procédé de détermination de la direction d'incidence du signal issu de trajets multiples décrit ci-après.

Sur la figure 2, on a représenté le capteur principal 1 et deux capteurs auxiliaires Ca, Cf alignés avec le capteur 1. Ces capteurs font partie des six capteurs auxiliaires Ca à Cf entourant le capteur 1. Tous ces capteurs sont, dans le cas présent, situés sur un cercle, centré sur le capteur 1 et régulièrement espacés sur ce cercle.

Soit $\varphi_i = \overline{k_{direct}} . \overrightarrow{1C_a}$  avec  $\overrightarrow{k_{direct}}$  vecteur d'onde du signal direct incident. Soit  $\psi_i = \overline{k_{parasite}} . \overrightarrow{1C_a}$

$\overrightarrow{k_{parasite}}$  vecteur d'onde du signal parasite incident (dû à des réflexions multiples du faisceau du satellite considéré).

Le signal direct du satellite est reçu sur le capteur Ca avec un déphasage $e^{j\varphi_i}$ par rapport au signal direct reçu sur le capteur central 1. Le signal parasite est quant à lui reçu sur le capteur Ca avec un déphasage $e^{j\psi_i}$ par rapport au signal parasite reçu sur le capteur central 1.

Comme indiqué sur la figure 2, les signaux des capteurs 1 et Ca sont corrélés (multipliés) en 11 et 12 respectivement avec le code PRN local (élaboré dans le récepteur). Le résultat de la corrélation en 11 est affecté en 14 d'un déphasage $e^{j\varphi_i}$ et soustrait en 15 du résultat de la corrélation venant de 12. Le résultat de la soustraction en 15 donne $E_i$. Ainsi, on obtient pour chacun des capteurs auxiliaires Ca, Cb, Cc, Cd, Ce et Cf la valeur de l'expression : $E_i = \chi_i - e^{j\varphi_i}.\chi_o$, expression dans laquelle $\chi_i$ est le résultat de la corrélation entre le code du signal reçu sur le capteur $C_i$ (avec i allant de a à f) et le code local, et $\chi_o$ étant le résultat de la corrélation entre le code du signal reçu sur le capteur 1 et le code local.

On appelle $S_i$ le signal reçu sur le capteur $C_i$, $S_o$ le signal reçu sur le capteur 1 (le signal reçu comprend le signal du faisceau direct et le signal du faisceau parasite), $A_{gps}$ l'amplitude du signal direct contenu dans $S_i$, $code_{gps}$ et $code_{mul}$ les codes PRN du signal du faisceau direct et du faisceau parasite (il s'agit évidemment des mêmes codes déphasés l'un par rapport à l'autre), (a) le facteur d'atténuation d'amplitude du signal parasite reçu lors de l'ensemble des réflexions qu'il a subies et $\Omega$ la rotation de phase globale subie par le signal parasite lors de ces mêmes réflexions. On obtient alors :

$$E_i = \left(S_i - e^{j\varphi_i}.S_o\right) \otimes code_{local}$$

$$= \left(A_{gps}.\left(code_{gps}.e^{j\varphi_i} + a.code_{mul}.e^{j\Omega}.e^{j\psi_i}\right) - e^{j\varphi_i}.A_{gps}.(code_{gps} + a.code_{mul}.e^{j\Omega})\right.$$
$$\left. + bruit\right) \otimes code_{local}$$

$$= \left(A_{gps}.a.code_{mul}.e^{j\Omega}.\left(e^{j\psi_i} - e^{j\varphi_i}\right)\right) \otimes code_{local} + bruit \otimes code_{local}$$

$$= \left(A_{gps}.a.code_{mul}.e^{j\Omega}.e^{j\varphi_i}\left(e^{j(\psi_i - \varphi_i)} - 1\right)\right) \otimes code_{local} + 0$$

$$= \left(A_{gps}.a.e^{j\Omega}.e^{j\left(\frac{\psi_i + \varphi_i}{2}\right)}.2j.\sin\left(\frac{\psi_i - \varphi_i}{2}\right)\right).\left(code_{mul} \otimes code_{local}\right)$$

Dans ces expressions, le signe $\otimes$ représente l'opération de corrélation (ou multiplication).

On pourra de même obtenir l'expression $E_{sym(i)}$ en appliquant le même type de calcul non pas au point $C_i$ mais au point $C_{sym(i)}$ (par exemple, si i=a, sym(i)=f).

Si on évalue alors l'expression Ratio$_i$ suivante :

$$Ratio_i = \frac{E_i}{E_{sym(i)}} \cdot \frac{-1}{e^{j\varphi i}}$$

On obtient :

$$Ratio_i = e^{j\psi i}$$

Ceci signifie que l'on obtient ainsi la valeur $e^{j\psi i}$ du déphasage induit par le réseau de capteurs à l'emplacement du capteur $C_i$, sur le trajet du faisceau parasite, ce qui revient à identifier la direction d'incidence de ce faisceau parasite.

Ensuite, on combine de manière pondérée, par exemple une combinaison par addition, les signaux provenant des n capteurs (n = 7 dans le cas présent). Le coefficient de pondération du signal recueilli par le capteur central est -(n-1), tandis que le signal recueilli par chacun des capteurs auxiliaires (i) est affecté du coefficient égal à $Ratio_{sym(i)}$. De cette façon, on élimine dans le signal résultant de la combinaison pondérée le signal dû au faisceau parasite.

Selon une variante du procédé de l'invention, au lieu de la combinaison pondérée décrite ci-dessus, on met en oeuvre un procédé d'inversion de puissance sous contrainte en utilisant fictivement lors du calcul numérique en entrée une représentation numérique d'un signal à bande étroite très puissant dans la direction d'arrivée du faisceau à trajets multiples.

Comme mentionné ci-dessus, une application préférée du procédé de l'invention est le traitement de signaux de satellites de radionavigation, traitement qui nécessite de réaliser sept corrélations et pondérations sur les signaux reçus, ainsi qu'une corrélation habituelle sur le signal reconstitué (après les combinaisons pondérées) pour que ce signal reconstitué puisse être utilisé classiquement par le dispositif de traitement de signal usuel du récepteur de radionavigation utilisé. Bien entendu, ce procédé suppose que l'on connaît la direction du satellite poursuivi, c'est-à-dire que l'on connaît les valeurs correspondantes de $e^{j\varphi i}$ (ce qui est vrai puisque l'on dispose habituellement d'almanachs et éphémérides donnant les trajectoires des satellites émetteurs des signaux de radionavigation). Ceci suppose qu'il y a un lien très étroit entre le traitement des signaux d'antenne et le traitement de poursuite de radionavigation, ce qui est également vrai si ces deux traitements sont effectués dans le même récepteur de signaux de satellites.

S'il s'agit de signaux émis par un émetteur terrestre et utilisant de même un procédé de type mesure de code, il est tout à fait envisageable d'utiliser les méthodes citées plus haut dans la mesure où l'on connaît a priori la position des émetteurs (c'est par exemple le cas pour des stations sol d'augmentation locale émettrices fixes...).

**Revendications**

1.  Procédé d'élimination dans un récepteur d'un signal incident résultant de trajets multiples, de puissance reçue, dans la bande traitement, plus faible que celle du bruit thermique du récepteur, appliqué à une antenne constituée autour d'un capteur principal d'antenne et comportant un réseau de capteurs auxiliaires, ces capteurs auxiliaires étant tous équidistants du capteur principal et régulièrement espacés entre eux, **caractérisé par le fait que** le réseau de capteurs auxiliaires comporte 2n capteurs auxiliaires (2, 3, Ca à Cf), avec $n \geq 3$, et, qu'en prenant successivement les couples de capteurs auxiliaires symétriques par rapport au capteur principal pour déterminer la direction d'arrivée du signal résultant des trajets multiples, on effectue la combinaison pondérée des signaux issus des n capteurs, la direction de l'émetteur étant connue.

2.  Procédé selon la revendication 1 pour des signaux de satellites, **caractérisé par le fait que** pour un nombre n de capteurs, on effectue, pour le capteur principal une pondération de -(n-1), et pour chacun des capteurs auxiliaires de rang i une pondération de $Ratio_{sym(i)}$, puis une sommation de toutes les valeurs pondérées, avec :

    $Ratio_{(i)} = \dfrac{E_{(i)}}{E_{sym(i)}} \cdot \dfrac{-1}{e^{j\phi i}}$ , expression dans laquelle $E(i) = \left(\chi_i - e^{j\phi i} \cdot \chi_o\right)$, $\chi_i$ étant le produit entre le code du signal reçu sur le capteur i et le code local, $\chi_o$ étant le même produit pour le capteur principal, $e^{j\phi i}$ étant le déphasage induit sur le capteur considéré par le signal direct, $E_{sym(i)}$ étant la valeur homologue de $E_{(i)}$ pour le capteur symétrique du capteur i par rapport au capteur principal et $Ratio_{sym(i)}$ la valeur homologue de $Ratio_{(i)}$ pour

le capteur symétrique du capteur i considéré par rapport au capteur principal.

**3.** Procédé selon la revendication 1 ou 2, **caractérisé par le fait que** la pondération met en oeuvre un procédé d'inversion de puissance sous contrainte en utilisant fictivement en tant que valeur de départ un signal à bande étroite très puissant qui proviendrait de la direction d'arrivée du signal à trajets multiples.

**4.** Dispositif d'élimination, dans un récepteur, de signaux incidents résultant de trajets multiples, comportant un capteur principal d'antenne (1) autour duquel est disposé un réseau de 2n capteurs auxiliaires (Ca à Cf), ces capteurs étant disposés sur un cercle centré sur le capteur principal et régulièrement espacés entre eux, ces capteurs étant reliés à des circuits de pondération (14, 16) et de combinaison (15, 17), **caractérisé en ce que** ledit dispositif est utilisé pour la détermination d'une direction d'arrivée différente, résultant de trajets multiples, de la direction connue d'un signal incident, en prenant successivement les couples de capteurs auxiliaires symétriques par rapport au capteur principal, et **en ce que** lesdits circuits de pondération et combinaison sont disposés pour effectuer une combinaison pondérée des signaux provenant des capteurs auxiliaires avec le signal provenant du capteur principal, pour fournir en sortie un signal $S_{-out}$ qui ne comporte que le signal utile.

## Claims

**1.** Method for the elimination in a receiver of an incident signal resulting from multipaths, of received power, in the processing band, smaller than that of the thermal noise of the receiver, applied to an antenna constructed around an antenna main sensor and comprising an array of auxiliary sensors, these auxiliary sensors all being equidistant from the main sensor and regularly spaced apart, **characterized in that** the array of auxiliary sensors comprises 2n auxiliary sensors (2, 3, Ca to Cf), with $n \geq 3$, and, that by successively taking the pairs of auxiliary sensors symmetric with respect to the main sensor to determine the direction of arrival of the signal resulting from the multipaths, the weighted combination of the signals arising from the n sensors is performed, the direction of the transmitter being known.

**2.** Method according to Claim 1 for satellite signals, **characterized in that** for a number n of sensors, a weighting by $-(n-1)$ is performed for the main sensor, and a weighting by $Ratio_{sym(i)}$ is performed for each of the auxiliary sensors of rank i, followed by a summation of all the weighted values, with: $Ratio_{(i)} = \dfrac{E_{(i)}}{E_{sym(i)}} \cdot \dfrac{-1}{e^{j\phi_i}}$ , in which expression $E(i) = \left( \chi_i - e^{j\phi_i} \cdot \chi_o \right)$, $\chi_i$ being the product between the code of the signal received on sensor i and the local code, $\chi_0$ being the same product for the main sensor, $e^{j\phi_i}$ being the phase shift induced on the sensor considered by the direct signal, $E_{sym(i)}$ being the value homologous to $E_{(i)}$ for the sensor symmetric to sensor i with respect to the main sensor and $Ratio_{sym(i)}$ the value homologous to $Ratio_{(i)}$ for the sensor symmetric to the sensor considered with respect to the main sensor.

**3.** Method according to Claim 1 or 2, **characterized in that** the weighting implements a constrained power inversion method using fictitiously as starting value a very powerful narrowband signal that would come from the direction of arrival of the multipath signal.

**4.** Device for the elimination, in a receiver, of incident signals resulting from multipaths, comprising an antenna main sensor (1) around which is disposed an array of 2n auxiliary sensors (Ca to Cf), these sensors being disposed on a circle centred on the main sensor and regularly spaced apart, these sensors being linked to weighting circuits (14, 16) and combining circuits (15, 17), **characterized in that** the said device is used for the determination of a different direction of arrival, resulting from multipaths, from the known direction of an incident signal, by successively taking the pairs of auxiliary sensors symmetric with respect to the main sensor, and **in that** the said weighting and combining circuits are arranged so as to perform a weighted combination of the signals originating from the auxiliary sensors with the signal originating from the main sensor, so as to output a signal $S_{-out}$ which comprises only the useful signal.

**Patentansprüche**

1. Verfahren zur Beseitigung, in einem Empfänger, eines Mehrweg-Empfangssignals mit einer Empfangsleistung in einem Verarbeitungsband, die schwächer ist als das thermische Rauschen des Empfängers, das an einer Antenne anliegt, die um einen Antennenhauptsensor herum angeordnet ist und ein Netz von Nebensensoren umfasst, wobei diese Nebensensoren vom Hauptsensor alle gleich beabstandet sind und untereinander regelmäßig beabstandet sind, **dadurch gekennzeichnet, dass** das Netz der Nebensensoren 2n Nebensensoren (2, 3, Ca bis Cf) umfasst, wobei n ≥ 3, und dass die gewichtete Kombination der von den n Sensoren ausgegebenen Signale durchgeführt wird, indem die Paare der Nebensensoren, die in Bezug auf den Hauptsensor symmetrisch sind, aufeinander folgend genommen werden, um die Ankunftsrichtung des Mehrwegsignals zu bestimmen, wobei die Richtung des Senders bekannt ist.

2. Verfahren nach Anspruch 1 für Satellitensignale, **dadurch gekennzeichnet, dass**, bei einer Zahl n von Sensoren, für den Hauptsensor eine Gewichtung von -(n-1) durchgeführt wird, und für jeden der Nebensensoren des Rangs i eine Gewichtung von Ratio$_{sym(i)}$, dann eine Summierung aller gewichteten Werte, wobei:

$$\text{Ratio}_{(i)} = \frac{E_{(i)}}{E_{sym(i)}} \cdot \frac{-1}{e^{j\phi_i}} \text{ , wobei in diesem Ausdruck } E(i) = \left( \chi_i - e^{j\phi_i} \cdot \chi_o \right) \text{, } \chi_i \text{ das Produkt zwischen dem}$$

Code des im Sensor i empfangenen Signals und dem lokalen Code ist, $\chi_o$ das gleiche Produkt für den Hauptsensor ist, $e^{j\varphi_i}$ die Phasenverschiebung ist, die am betreffenden Sensor durch das direkte Signal induziert wird, $E_{sym(i)}$ der entsprechende Wert von $E_{(i)}$ für den Sensor ist, der in Bezug auf den Hauptsensor zum Sensor i symmetrisch ist, Ratio$_{sym(i)}$ der entsprechende Wert von Ratio$_{(i)}$ für den Sensor ist, der in Bezug auf den Hauptsensor zum betreffenden Sensor i symmetrisch ist.

3. Verfahren nach Anspruch 1 oder 2, **dadurch gekennzeichnet, dass** die Gewichtung ein erzwungenes Leistungsumkehrverfahren anwendet, indem es als fiktiven Ausgangswert ein sehr starkes Schmalbandsignal verwendet, das aus der Ankunftsrichtung des Mehrwegsignals kommt.

4. Vorrichtung zur Beseitigung, in einem Empfänger, von Mehrweg-Empfangssignalen, umfassend einen Antennenhauptsensor (1), um welchen herum ein Netz von 2n Nebensensoren (Ca bis Cf) angeordnet ist, wobei diese Sensoren auf einem Kreis angeordnet sind, der den Hauptsensor zum Mittelpunkt hat, und untereinander regelmäßig beabstandet sind, diese Sensoren mit Gewichtungs- (14, 16) und Kombinationsschaltungen (15, 17) verbunden sind, **dadurch gekennzeichnet, dass** diese Vorrichtung zur Bestimmung einer Ankunftsrichtung verwendet wird, die von der bekannten Richtung eines Mehrweg-Empfangssignals abweicht, indem die Paare der Nebensensoren, die symmetrisch in Bezug auf den Hauptsensor sind, aufeinander folgend genommen werden, und **dadurch**, dass diese Gewichtungs- und Kombinationsschaltungen angeordnet sind, um eine gewichtete Kombination der von den Nebensensoren kommenden Signale mit dem vom Hauptsensor kommenden Signal durchzuführen, um ein Signal S$_{-out}$ auszugeben, das nur das Nutzsignal enthält.

$S_{invisible}$

$S_{utile}$

$S\_out = S\_utile$

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6175327 B